# NEUE EUROPÄISCHE PATENTSCHRIFT

(11) **EP 2 028 576 B2**
(45) Veröffentlichungstag und Bekanntmachung des Hinweises auf die Entscheidung über den Einspruch: **26.03.2014**
(45) Hinweis auf die Patenterteilung: 01.09.2010
(21) Anmeldenummer: 08158731.3
(22) Anmeldetag: 23.06.2008
(51) Int. Cl.: G05B 19/042, G05B 19/418

(54) **Gebäudemanagementsystem bzw. zugehörige Aktoren**
Building management system and corresponding actuators
Système de gestion des bâtiments ou actionneurs correspondants

(30) Priorität: 21.08.2007 DE 102007039386
(43) Veröffentlichungstag der Anmeldung: 25.02.2009
(73) Patentinhaber: Zumtobel Lighting GmbH, 6850 Dornbirn (AT)
(72) Erfinder: Mathis, Christoph, 6900 Bregenz (AT)
(74) Vertreter: Thun, Clemens

(56) Entgegenhaltungen:
- EP-A1- 1 744 248
- EP-A2- 1 260 886
- DE-A1-102004 005 219
- DE-A1-102004 011 784
- US-A- 5 682 476
- ZIGBEE ALLIANCE: 'Vision for the Home' VISION FOR THE HOME, ZIGBEE WIRELESS HOME AUTOMATION Seiten 104 - 110

## Beschreibung

Die vorliegende Erfindung betrifft ein System mit einem Gebäudemanagementsystem und einer Datensammeleinrichtung, wobei das Gebäudemanagmentsystem Aktoren, von denen zumindest einige mit Mitteln zum Erfassen von Umwelt- und/oder Betriebsdaten ausgestattet oder verbunden sind, und wenigstens eine Steuereinrichtung aufweist, wobei die Aktoren über ein Bussystem mit der Steuereinrichtung verbunden sind. Ferner betrifft die vorliegende Erfindung die Verwendung von Aktoren, die beispielsweise in einem solchen Gebäudemanagementsystem eingesetzt werden.

Aus dem Stand der Technik sind Gebäudemanagementsysteme bekannt, bei denen einzelne Aktoren an eine zentrale Steuereinrichtung angeschlossen sind. Derartige Gebäudemanagementsysteme können unter anderem bspw. den deutschen Offenlegungschriften DE 10 2004 005 219 A1 und DE 10 2004 011 784 A1 sowie dem amerikanischen Patent US 5,682,476 entnommen werden. Die Aktoren übermitteln Informationen zur ihrem Betriebszustand und/oder zu den vorliegenden Umweltbedingungen an die zentrale Steuereinrichtung des Gebäudes. Die Steuereinrichtung steuert die Aktoren auf Basis dieser Informationen und der Programmierung der Steuereinrichtung. Dabei kann sie beispielsweise eine Leuchte ein- oder ausschalten oder die Temperatur eines Klimagerätes an die Umweltbedingungen anpassen.

Zur Sammlung von Umweltdaten sind die Aktoren üblicherweise mit entsprechenden Sensoren verbunden. Die Betriebsdaten können beispielsweise von der internen Steuereinheit des Aktors aufgezeichnet bzw. protokolliert werden oder ebenfalls durch entsprechende Sensoren bestimmt werden.

Ferner, ist es denkbar, dass die Informationen, die die Aktoren sammeln und an die zentrale Steuereinrichtung weitergeben, auch von einem zweiten, nicht mit der zentralen Steuereinrichtung verbundenen System benötigt werden. Beispielsweise könnten die von den Aktoren bzw. von den mit den Aktoren verbundenen Sensoren gesammelten Informationen als Teil einer wissenschaftlichen Studie ausgewertet werden. So könnten die Wissenschaftler beispielsweise das Arbeitsverhalten der Angestellten in einem Bürogebäude anhand der von den Aktoren gemessenen Daten untersuchen. Es ist durchaus möglich, dass den Wissenschaftlern aus sicherheitstechnischen Gründen kein Zugang zu der zentralen Steuereinrichtung gewährt werden kann.

Aufgabe der vorliegenden Erfindung ist es deshalb, ein System zu schaffen, das einen Zugang zu den Daten ermöglicht, welche die mit entsprechenden Mitteln ausgestatteten Aktoren sammeln, ohne dass ein Zugang auf die zentrale Steuereinrichtung gewährt wird.

Diese Aufgabe wird durch ein System entsprechend dem Anspruch 1 sowie durch die Verwendung eines Aktors gemäß Anspruch 15 gelöst. Vorteilhafte Weiterbildungen sind Gegenstand der Unteransprüche.

Erfindungsgemäß wird dementsprechend ein System vorgeschlagen, dass ein Gebäudemanagementsystem und eine Datensammeleinrichtung aufweist, wobei das GebäudemanagementsystemAktoren, von denen zumindest einige mit Mittel zum Erfassen von Umwelt- und/oder Betriebsdaten ausgestattet oder verbunden sind, und wenigstens eine Steuereinrichtung aufweist, wobei die Aktoren über ein Bussystem mit der Steuereinrichtung verbunden sind. Dabei weisen die mit den Mitteln zum Erfassen von Umwelt- und/oder Betriebsdaten ausgestatteten oder verbundenen Aktoren ferner eine weitere Sendeeinheit auf, welche die erfassten Daten an die nicht mit der Steuereinrichtung verbundene Datensammeleinrichtung übertragen kann.

Vorzugsweise erfolgt die Datenübermittlung über ein öffentlich zugängliches Kommunikationsnetz, insbesondere über das Internet. Dabei werden die Daten im TCP/IP Protokoll übermittelt. Ferner besitzt vorzugsweise jeder Aktor eine eindeutige IP-Adresse und nimmt zu einem Webserver Kontakt auf.

Alternativ hierzu sind jedoch auch andere Wege der Datenübermittlung denkbar. So könnte etwa das Mobilfunknetz genutzt werden, um die Daten von der weiteren Sendeeinheit zur von der Steuereinheit unabhängigen Datensammelvorrichtung zu übertragen. Dabei könnten die entsprechenden Daten beispielsweise in Form einer Textmitteilung (SMS) versendet werden.

Einige der Aktoren sind mit Mitteln zum Erfassen von Umwelt- und/oder Betriebsdaten ausgestattet, wobei Umweltdaten üblicherweise mit Hilfe von entsprechenden Sensoren erfasst werden, welche mit dem Aktor verbunden oder Bestandteil des Aktors sind. Die Betriebsdaten können ebenfalls mit Sensoren erfasst werden oder der Aktor weist eine interne Steuereinheit auf, welche die Betriebsdaten aufzeichnet bzw. protokolliert.

Bei den Umweltdaten handelt es sich beispielsweise um die Umgebungstemperatur und die Luftfeuchtigkeit. Weitere interessante Daten stellen die Helligkeit innerhalb eines Raumes oder die Frage, ob sich Personen in dem Raum befinden, dar. Als Betriebsdaten sind besonders die Betriebsdauer und die Betriebsweise des jeweiligen Aktors von Interesse.

Das Bussystem, das die Aktoren mit der zentralen Steuereinrichtung verbindet, kann entweder drahtlos oder drahtgebunden ausgestaltet sein.

Die von der Steuereinheit unabhängige Datensammeleinrichtung ist vorzugsweise derart gestaltet, dass sie die ermittelten Daten statistisch auswerten kann. In einem anderen Ausführungsbeispiel kann diese Datensammeleinrichtung auch mit Mitteln ausgestattet sein, um auf Basis der erhaltenen Daten einen Alarm auszulösen.

Erfindungsgemäß wird ferner die Verwendung eines Aktors vorgeschlagen, der mit Mitteln zur Erfassung von Umwelt- und/oder Betriebesdaten ausgestattet oder verbunden ist, und der über ein Bussystem an die zentrale Steuereinheit eines Gebäudemanagementsystems anschließbar und von dieser steuerbar ist, wobei der Aktor erfindungsgemäß eine Sendeeinheit zur Übermittlung der erfassten Daten an eine nicht mit der Steuereinrichtung verbundene Datensammeleinrichtung aufweist. Anzumerken ist, dass alternativ zu dem oben Gesagten das Konzept der Übermittlung von Daten an eine Datensammeleinrichtung auch auf Aktoren anwendbar ist, die autark, insbesondere unabhängig von der Steuereinrichtung eines Gebäudemanagementsystems arbeiten. Auch in diesem Fall kann das durch den Aktor selbständig initiierte Übermitteln von Informationen von besonderem Interesse sein, weshalb ein weiterer unabhängiger Anspruch auch auf einen solchen Aktor gerichtet ist.

Nachfolgend soll die Erfindung anhand der beiliegenden Zeichnung näher erläutert werden. Es zeigen:
Fig. 1 eine schematische Darstellung des erfindungsgemäßen Systems;
Fig. 2 ein Ausführungsbeispiel eines Aktors in Form einer Leuchte, die mit Sensoren und einer weiteren Sendeeinheit ausgestattet ist.

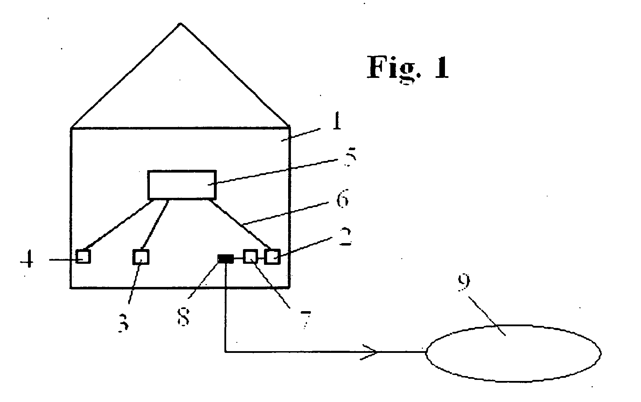

Fig.1 zeigt ein erfindungsgemäßes System mit einem Gebäudemanagementsystem, das sich innerhalb des Gebäudes 1 befindet. Es ist dabei nicht zwangsläufig so, dass das Gebäudemanagementsystem nur für ein einzelnes Gebäude 1 zuständig ist. Es ist durchaus möglich, dass das Gebäudemanagementsystem die Steuerung eines ganzen Komplexes aus mehreren Gebäuden 1 und/oder Freiflächen übernimmt.

Das Gebäudemanagementsystem weist mehrere Aktoren 2, 3, 4 sowie eine zentrale Steuereinrichtung 5 auf. Die Aktoren sind durch ein drahtloses oder drahtgebundenes Bussystem 6 an die Steuereinrichtung angeschlossen.

Bei den Aktoren 2, 3, 4 kann es sich beispielsweise um Leuchten, Jalousien oder Klimageräte handeln. Das zentrale Steuersystem 5 übernimmt die Steuerung dieser Aktoren 2, 3, 4. So kann das zentrale Steuersystem 5 beispielsweise Leuchten tageszeitabhängig ein- oder ausschalten oder die Temperaturregelung eines Klimagerätes verändern. Es wäre allerdings auch möglich, dass die Aktoren 2, 3, 4 unabhängig von einer zentralen Steuereinrichtung betrieben werden.

Ferner sind zumindest einige der Aktoren 2 mit Mitteln 7 zum Erfassen von Umwelt- und/oder Betriebsdaten ausgestattet bzw. mit entsprechenden Mitteln verbunden. Hierbei kann es sich beispielsweise um Sensoren oder die internen Steuereinheit des Aktors handeln. Zu den erfassten Größen zählen insbesondere die Umgebungstemperatur, die Luftfeuchtigkeit, die Betriebsdauer und Betriebsweise. Ferner sind Sensoren denkbar, die beispielsweise die Anwesenheit von Personen oder die Helligkeit innerhalb eines Raumes ermitteln. Darüber hinaus ist es natürlich nicht ausgeschlossen, weitere Arten von Sensoren 7 einzusetzen.

Die so gesammelten Daten können an die zentrale Steuereinrichtung 5 weitergeleitet werden, so dass die zentrale Steuereinrichtung 5 auf Basis dieser Daten die Aktoren 2 ansteuert. Wird etwa eine unerwünscht hohe Raumtemperatur gemessen, so kann die zentrale Steuereinrichtung die Einstellung des Klimageräts entsprechend anpassen.

Auch Fehler im laufenden Betrieb können auf diese Weise an die Steuereinrichtung 5 übermittelt werden, um geeignete Wartungsmaßnahmen zu veranlassen.

Erfindungsgemäß weisen die mit Sensoren 7 verbundenen Aktoren 2 ferner eine weitere Sendeeinheit 8 auf, die die erfassten Daten an eine nicht mit der Steuereinrichtung verbundene Datensammeleinrichtung 9 weiterleitet. Diese Datenübermittlung erfolgt vorzugsweise über das Internet.

Eine solche Datenübermittlung zu einer Datensammeleinrichtung 9, die nicht mit der zentralen Steuereinrichtung 5 des Gebäudes 1 verbunden ist, kann aus verschiedenen Gründen gewünscht sein. Einen ersten Verwendungszweck stellt eine bereits in der Einleitung diskutierte wissenschaftliche Studie dar, bei der die Gebäudeleitung beispielsweise aus Sicherheitsgründen keinen Zugang zur zentralen Steuereinrichtung 5 gewähren möchte. Die erfindungsgemäße Datenübermittlung erfolgt nur in eine Richtung. Die Aktoren 2 sind zwar mit einer Sendeeinheit 8 ausgestattet, sie besitzen jedoch keine Empfangseinheit. Die Datensammeleinrichtung 9 kann somit lediglich aufgezeichnete Daten sammeln, aber er kann selbst keine Steuerbefehle an die Aktoren 2 schicken. Das Sicherheitsrisiko ist somit minimal.

Ein weiterer Verwendungszweck für das erfindungsgemäße System ergibt sich aus den Marktforschungsinteressen des Herstellers der Aktoren 2. In diesem Zusammenhang werden vorzugsweise Betriebsinformationen und andere den Betrieb des Aktors betreffende Daten aufgezeichnet und die Sendeeinrichtung 8 übermittelt diese an die Datensammeleinrichtung 9 des Herstellers.

Ein Leuchtenhersteller hat in der Regel keinen Zugang zu der Steuereinrichtung 5 eines Gebäudemanagementsystems, das die von ihm produzierten Leuchten verwendet. Dennoch kann es für den Leuchtenhersteller zum Zweck der Marktforschung interessant sein, Daten beispielsweise zur Betriebsdauer der Leuchten zu sammeln. Daher sind die Leuchten in der Lage eigenständig über ein von dem Gebäudemanagementsystem getrenntes Netz Informationen an den Hersteller weiterzuleiten.

Bei den beiden hier beschriebenen Anwendungsbeispielen wird die von der Steuereinheit unabhängige Datensammeleinrichtung 9 jeweils dazu eingesetzt, die von den Aktoren 2 gesammelten Daten statistisch auszuwerten. Aus datenschutzrechtlichen Gründen kann es erforderlich sein, die gesammelten Daten zu anonymisieren. Die Datensammeleinrichtung 9 sollte daher mit entsprechenden Mitteln ausgestattet werden.

Es sind jedoch auch völlig andere Verwendungszwecke für die Aktoren 2 denkbar. So könnte die Datensammeleinrichtung 9 beispielsweise mit Mitteln ausgestattet sein, die auf Basis der von den Aktoren 2 gesammelten Daten einen Alarm auslösen können.

Beispielsweise kann es sich bei den Sensoren 7 um Rauchmelder oder Temperaturmessgeräte handeln, die als Brandmelder eingesetzt werden können. Üblicherweise würde ein solcher Brand von dem Sensor 7 bzw. dem damit verbundenen Aktor 2 an die zentrale Steuereinrichtung 5 gemeldet werden, die dann einen Alarm auslöst. Sollte diese Steuereinrichtung 7 jedoch aus irgendeinem Grund funktionsunfähig sein oder sollte das Bussystem 6 durch den Brand bereits zerstört sein, so kann die Verbindung zu der Datensammeleinrichtung 9 eine weitere Absicherung darstellen. Da dieser üblicherweise räumlich von dem Gebäude 1 getrennt ist, kann er durch den Brand nicht beschädigt werden und ist somit in der Lage, einen Alarm auszulösen.

Auch das folgende Szenario ist möglich: Eine Anlage besteht aus mehreren Gebäuden 1, die jeweils ihre eigene Steuereinheit 5 aufweisen, wobei es eine Datensammeleinrichtung 9 gibt, der jeweils mit den Aktoren 2 in den verschiedenen Gebäuden 1 verbunden ist. Die Datensammeleinrichtung 9 kann dann überwachen, in welcher Weise die Aktoren 2 in den Gebäuden 1 eingesetzt werden und so die verschiedenen Gebäudemanagementsysteme miteinander vergleichen.

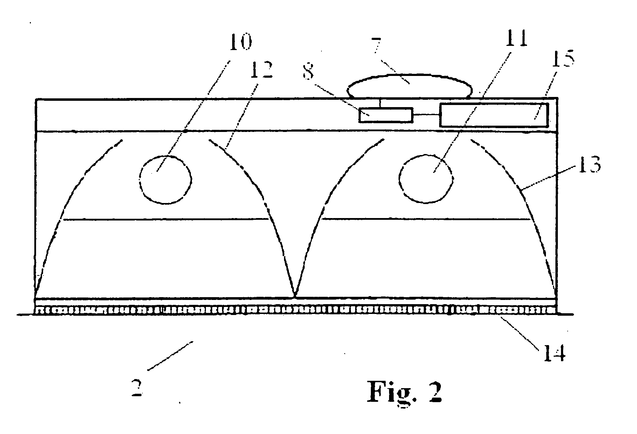

Ein Beispiel eines Aktors 2 ist in Fig. 2 zu sehen. Es handelt sich dabei um eine Leuchte. Es sind jedoch auch verschiedenste andere Aktoren im Rahmen der Erfindung einsetzbar. Hierzu zählen unter anderem Klimageräte, Jalousien, Mittel zur Beschallung, Bildschirme oder Kameras.

Die Leuchte 2 weist als Lichtquellen zwei Leuchtstoffröhren 10 und 11 auf, welche jeweils teilweise von einem Reflektor 12, 13 umgeben sind. Ferner befindet sich unterhalb der Leuchtstoffröhren ein Lichtbeeinflussungselement 14, wobei es sich in diesem Fall um eine Milchglasplatte 14 handelt. Die Leuchte 2 weist ferner ein Steuergerät 15 auf, das die Leuchte 2 ein- oder ausschaltet sowie dimmt. Dieses Steuergerät 15 ist mit der zentralen Steuereinheit 5 des Gebäudes verbunden und erhält von dieser zentralen Steuereinheit 5 Anweisungen zum Betrieb der Leuchte.

Erfindungsgemäß ist die Leuchte 2 ferner mit mindestens einem Sensor 7 oder einem anderen Mittel 7 zur Erfassung von Umwelt- und/oder Betriebsdaten ausgestattet. Ferner verfügt die Leuchte 2 erfingdungsgemäß über eine Sendeeinheit 8, die die vom Sensor 7 bzw. vom Aktor 2 aufgezeichneten Daten an einen von der zentralen Steuereinheit 5 unabhängige Datensammeleinrichtung weiterleitet.

Vorzugsweise erfolgt diese Datenübertragung durch ein öffentlich zugängliches Kommunikationsnetz, insbesondere über das Internet. Die Daten werden dabei entsprechend im TCP/IP Protokoll übermittelt. Ferner besitzt vorzugsweise jeder Aktor eine eindeutige IP-Adresse und nimmt zu einem Webserver Kontakt auf.

Das Internet stellt jedoch nicht den einzig denkbaren Weg zur Datenübermittlung dar. Es ist beispielsweise auch möglich, die Daten mittels des Mobilfunknetzes an die Datensammeleinrichtung weiterzuleiten. Dazu könnten die entsprechenden Informationen in Form einer Textmitteilung (SMS) verschickt werden.

Die Leuchte 2 ist derart ausgestaltet, das sie sowohl Signale an die zentrale Steuereinrichtung 5 des Gebäudes senden kann, als auch Signale dieser zentralen Steuereinrichtung 5 empfangen kann. Ferner kann die Leuchte 2 erfindungsgemäß ebenfalls Signale an die von der zentralen Steuereinrichtung 5 unabhängige Datensammeleinrichtung 9 übermitteln. Die Leuchte 2 kann jedoch keine Signale dieser Datensammeleinrichtung 9 empfangen. Die Leuchte 2 könnte auch so ausgestaltet sein, dass sie nicht mit einer zentralen Steuereinrichtung 5 verbunden ist, und dennoch Signale an die Datensammeleinrichtung 9 übermittelt, ohne von dieser Signale empfangen zu können. Insbesondere ist das erfindungsgemäße Konzept der Aufzeichnung bzw. Erfassung von Daten und Übermittlung dieser Daten an eine Datensammeleinrichtung auch auf Aktoren anwendbar, welche selbständig bzw. unabhängig von einem größeren Beleuchtungs- oder Gebäudemanagementsystem arbeiten.

## Patentansprüche

1. System, aufweisend
• ein Gebäudemanagementsystem, welches Aktoren (2, 3, 4), von denen zumindest einige mit Mitteln (7) zum Erfassen von Umwelt- und/oder Betriebsdaten ausgestattet oder verbunden sind, und wenigstens eine Steuereinrichtung (5) aufweist, und
• eine Datensammeleinrichtung (9), welche nicht mit der
Steuereinrichtung (5) des Gebäudemanagementsystem verbunden ist, wobei die Aktoren (2, 3, 4) über ein Bussystem (6) mit der Steuereinrichtung (5) verbunden sind und von dieser steuerbar sind und wobei diejenigen Aktoren, die mit den Mitteln (7) zum Erfassen von Umwelt- und/oder Betriebsdaten ausgestattet oder verbunden sind, eine Sendeeinheit (8) zur Übermittlung der erfassten Daten an die Datensammeleinrichtung (9) aufweisen, wobei die Übermittlung der erfassten Daten nur in Richtung der Datensammeleinrichtung (9) erfolgt und die Aktoren keine Signale der Datensammeleinrichtung (9) empfangen können.

2. System nach Anspruch 1,
**dadurch gekennzeichnet,**
**dass** die Datenübermittlung über ein öffentlich zugängliches Kommunikationsnetz erfolgt.

3. System nach einem der vorherigen Ansprüche,
**dadurch gekennzeichnet,**
**dass** die Datenübermittlung über das Internet erfolgt und die Daten entsprechend im TCP/IP Protokoll übermittelt werden.

4. System nach Anspruch 3,
**dadurch gekennzeichnet,**
**dass** jeder mit den Mitteln (7) zum Erfassen von Umwelt- und/oder Betriebsdaten ausgestattete Aktor (2) eine eindeutige IP-Adresse besitzt.

5. System nach einem der Ansprüche 3 oder 4,
**dadurch gekennzeichnet,**
**dass** jeder mit Mitteln (7) zum Erfassen von Umwelt- und/oder Betriebsdaten ausgestattete Aktor (2) ferner mit Mitteln ausgestattet ist, um mit einem Webserver Kontakt aufzunehmen.

6. System nach einem der Ansprüche 1 oder 2,
**dadurch gekennzeichnet,**
**dass** die Datenübermittlung über das Mobilfunknetz erfolgt.

7. System nach einem der vorherigen Ansprüche,
**dadurch gekennzeichnet,**
**dass** es sich bei den Mitteln (7) zum Erfassen von Umweltdaten um Sensoren (7) zur Messung von Umgebungstemperatur und die Luftfeuchtigkeit handelt.

8. System nach einem der vorherigen Ansprüche,
**dadurch gekennzeichnet,**
**dass** es sich bei den Mitteln (7) zum Erfassen von Umweltdaten um Sensoren (7) zur Messung der Helligkeit handelt.

9. System nach einem der vorherigen Ansprüche,
**dadurch gekennzeichnet,**
**dass** es sich bei den Mitteln (7) zum Erfassen von Umweltdaten um Sensoren (7) zur Erkennung der Anwesenheit von Personen handelt.

10. System nach einem der vorherigen Ansprüche,
dadurch **gekennzeiehnet,**
dass die Mitteln (7) zum Erfassen von Betriebsdaten die Betriebsdauer und die Betriebsweise des Aktors (2) ermitteln.

11. System nach einem der vorherigen Ansprüche,
**dadurch gekennzeichnet,**
**dass** die Aktoren (2, 3, 4) durch ein drahtloses Bussystem (6) mit der Steuereinrichtung (5) verbunden sind.

12. System nach einem der Ansprüche 1-10,
**dadurch gekennzeichnet,**
**dass** die Aktoren (2, 3, 4) durch ein drahtgebundenen Bussystem (6) mit der Steuereinrichtung (5) verbunden sind.

13. System nach einem der vorherigen Ansprüche,
**dadurch gekennzeichnet,**
**dass** die Datensammeleinrichtung (9) mit Mitteln ausgestattet ist, um die erhaltenen Daten statistisch auszuwerten.

14. System nach einem der Ansprüche 1-12,
**dadurch gekennzeichnet,**
**dass** die Datensammeleinrichtung (9) mit Mitteln ausgestattet ist, um auf Basis der erhaltenen Daten einen Alarm auszulösen.

15. Verwendung eines Aktors (2) in einem System nach einem der vorherigen Ansprüche, wobei der Aktor mit Mitten (7) zur Erfassung von Umwelt-und/oder Betriebsdaten ausgestattet oder verbunden ist, und über ein Bussystem (6) an die zentrale Steuereinheit (5) des Gebäudemanagementsystems anschließbar und von dieser steuerbar ist und wobei der Aktor (2) eine Sendeeinheit (8) zur Übermittlung der erfassten Daten an die nicht mit der Steuereinrichtung (5) verbundene Datensammeleinrichtung (9) aufweist, wobei die Übermittlung der erfassten Daten nur in Richtung der Datensammeleinrichtung (9) erfolgt und der Aktor (2) keine Signale der Datensammeleinrichtung (9) empfangen kann.

16. Verwendung eines Aktor nach Anspruch 15,
**dadurch gekennzeichnet,**
**dass** die Datenübermittlung über ein öffentlich zugängliches Kommunikationsnetz erfolgt.

17. Verwendung eines Aktor nach einem der Ansprüche 15 oder 16,
**dadurch gekennzeichnet,**
**dass** die Datenübermittlung über das Internet erfolgt und die Daten entsprechend im TCP/IP Protokoll übermittelt werden.

18. Verwendung eines Aktor nach Anspruch 17,
**dadurch gekennzeichnet,**
**dass** der Aktor (2) eine eindeutige IP-Adresse besitzt.

19. Verwendung eines Aktor nach einem der Ansprüche 17 oder 18,
**dadurch gekennzeichnet,**
**dass** der Aktor (2) mit Mitteln ausgestattet ist, um mit einem Webserver Kontakt aufzunehmen.

20. Verwendung eines Aktor nach einem der Ansprüche 15 oder 16,
**dadurch gekennzeichnet,**
**dass** die Datenübermittlung über das Mobilfunknetz erfolgt.

21. Verwendung eines Aktor nach einem der Ansprüche 15-20,
**dadurch gekennzeichnet,**
**dass** es sich bei den Mitteln (7) zum Erfassen von Umweltdaten um Sensoren (7) zur Messung von Umgebungstemperatur, Luftfeuchtigkeit, Helligkeit und/oder der Anwesenheit von Personen handelt.

22. Verwendung eines Aktor nach einem der Ansprüche 15-20,
**dadurch gekennzeichnet,**
**dass** die Mittel (7) zum Erfassen von Betriebsdaten die Betriebsdauer und die Betriebsweise des Aktors (2) ermitteln.

23. Verwendung eines Aktor nach einem der Ansprüche 15-22,
**dadurch gekennzeichnet,**
**dass** der Aktor (2) durch ein drahtloses Bussystem (6) mit der Steuereinrichtung (5) verbunden ist.

24. Verwendung eines Aktor nach einem der Ansprüche 15-22,
**dadurch gekennzeichnet,**
**dass** der Aktor (2) durch ein drahtgebundenen Bussystem (6) mit der Steuereinrichtung (5) verbunden ist.

## Claims

1. A system having
• a building management system which has actuators (2, 3, 4), of which at least some are equipped with or connected to means (7) for acquiring environmental and/or operational data, and at least one control device (5), and
• a data-collecting device (9), which is not connected to the control device (5) of the building management system,
wherein the actuators (2, 3, 4) are connected to the control device (5) by way of a bus system (6) and can be controlled by the control device (5), and wherein those actuators that are equipped with or connected to the means (7) for acquiring environmental and/or operational data have a send unit (8) for transmitting the acquired data to the data-collecting device (9), wherein the transmission of the acquired data is effected only in the direction of the data-collecting device (9), and the actuators cannot receive any signals of the data-collecting device (9).

2. A system according to claim 1,
**characterised in that**
the data transmission is effected by way of a publicly accessible communications network.

3. A system according to one of the previous claims,
**characterised in that**
the data transmission is effected by way of the Internet, and the data are transmitted accordingly using the TCP/IP protocol.

4. A system according to claim 3,
**characterised in that**
each actuator (2) that is equipped with the means (7) for acquiring environmental and/or operational data has a unique IP address.

5. A system according to one of claims 3 or 4,
**characterised in that**
each actuator (2) that is equipped with means (7) for acquiring environmental and/or operational data is further equipped with means for establishing contact with a web server.

6. A system according to one of claims 1 or 2,
**characterised in that**
the data transmission is effected by way of the mobile phone network.

7. A system according to one of the previous claims,
**characterised in that**
the means (7) for acquiring environmental data are sensors (7) for measuring environmental temperature and the air humidity.

8. A system according to one of the previous claims,
**characterised in that**
the means (7) for acquiring environmental data are sensors (7) for measuring the light level.

9. A system according to one of the previous claims,
**characterised in that**
the means (7) for acquiring environmental data are sensors (7) for identifying the presence of people.

10. A system according to one of the previous claims,
**characterised in that**
the means (7) for acquiring operational data ascertain the length of operation and the mode of operation of the actuator (2).

11. A system according to one of the previous claims,
**characterised in that**
the actuators (2, 3, 4) are connected to the control device (5) by means of a wireless bus system (6).

12. A system according to one of claims 1-10,
**characterised in that**
the actuators (2, 3, 4) are connected to the control device (5) by means of a wired bus system (6).

13. A system according to one of the previous claims,
**characterised in that**
the data-collecting device (9) is equipped with means for evaluating statistically the data obtained.

14. A system according to one of claims 1-12,
**characterised in that**
the data-collecting device (9) is equipped with means for triggering an alarm on the basis of the data obtained.

15. Use of an actuator (2) in a system according to one of the previous claims, wherein the actuator is equipped with or connected to means (7) for acquiring environmental and/or operational data and can be linked to the central control unit (5) of the building management system by way of a bus system (6) and can be controlled by the central control unit (5), and wherein the actuator (2) has a send unit (8) for transmitting the acquired data to the data-collecting device (9), which is not connected to the control device (5), wherein the transmission of the acquired data is effected only in the direction of the data-collecting device (9), and the actuator (2) cannot receive any signals of the data-collecting device (9).

16. Use of an actuator according to claim 15,
**characterised in that**
the data transmission is effected by way of a publicly accessible communications network.

17. Use of an actuator according to one of claims 15 or 16,
**characterised in that**
the data transmission is effected by way of the Internet, and the data are transmitted accordingly using the TCP/IP protocol.

18. Use of an actuator according to claim 17,
**characterised in that**
the actuator (2) has a unique IP address.

19. Use of an actuator according to one of claims 17 or 18,
**characterised in that**
the actuator (2) is equipped with means for establishing contact with a web server.

20. Use of an actuator according to one of claims 15 or 16,
**characterised in that**
the data transmission is effected by way of the mobile phone network.

21. Use of an actuator according to one of claims 15-20,
**characterised in that**
the means (7) for acquiring environmental data are sensors (7) for measuring environmental temperature, air-humidity, light level and/or the presence of people.

22. Use of an actuator according to one of claims 15-20,
**characterised in that**
the means (7) for acquiring operational data ascertain the length of operation and the mode of operation of the actuator (2).

23. Use of an actuator according to one of claims 15-22,
**characterised in that**
the actuator (2) is connected to the control device (5) by means of a wireless bus system (6).

24. Use of an actuator according to one of claims 15-22,
**characterised in that**
the actuator (2) is connected to the control device (5) by means of a wired bus system (6).

## Revendications

1. Système présentant
- un système de gestion de bâtiments, qui présente des actionneurs (2, 3, 4), parmi lesquels au moins quelques-uns sont équipés de moyens (7) servant à détecter des données relatives à l'environnement et/ou au fonctionnement ou sont reliés à ces derniers, et au moins un dispositif de commande (5), et
- un dispositif de collecte de données (9), qui n'est pas relié au dispositif de commande (5) du système de gestion de bâtiments,
sachant que les actionneurs (2, 3, 4) sont reliés au dispositif de commande (5) par l'intermédiaire d'un système de bus (6) et peuvent être commandés par ledit dispositif de commande et sachant que précisément les actionneurs, qui sont équipés des moyens (7) servant à détecter des données relatives à l'environnement et/o u au fonctionnement ou sont reliés auxdits moyens, présentent une unité d'émission (8) servant à transmettre les données détectées au dispositif de collecte de données (9), sachant que la transmission des données détectées ne se sait qu'en direction du dispositif de collecte de données (9) et sachant que les actionneurs ne peuvent recevoir aucun signal du dispositif de collecte de données (9).

2. Système selon la revendication 1,
**caractérisé en ce**
**que** la transmission de données se fait par l'intermédiaire d'un réseau de communication accessible au public.

3. Système selon l'une quelconque des revendications précédentes,
**caractérisé en ce**
**que** la transmission de données se fait par l'intermédiaire d'Internet, et que les données sont transmises de manière correspondante en utilisant le protocole TCP/IP.

4. Système selon la revendication 3,
**caractérisé en ce**
**que** chaque actionneur (2) équipé des moyens (7) servant à détecter des données relatives à l'environnement et/ou au fonctionnement possède une adresse IP unique.

5. Système selon l'une quelconque des revendications 3 ou 4,
**caractérisé en ce**
**que** chaque actionneur (2) équipé de moyens (7) servant à détecter des données relatives à l'environnement et/ou au fonctionnement est en outre équipé de moyens afin d'établir un contact avec un serveur web.

6. Système selon l'une quelconque des revendications 1 ou 2,
**caractérisé en ce**
**que** la transmission de données se fait par l'intermédiaire du réseau de radiotéléphonie.

7. Système selon l'une quelconque des revendications précédentes,
**caractérisé en ce**
**que** les moyens (7) servant à détecter des données relatives à l'environnement sont des capteurs (7) servant à mesure la température ambiante et l'humidité de l'air.

8. Système selon l'une quelconque des revendications précédentes,
**caractérisé en ce**
**que** les moyens (7) servant à détecter des données relatives à l'environnement sont des capteurs (7) servant à mesurer la luminosité.

9. Système selon l'une quelconque des revendications précédentes,
**caractérisé en ce**
**que** les moyens (7) servant à détecter des données relatives à l'environnement sont des capteurs (7) servant à identifier la présence de personnes.

10. Système selon l'une quelconque des revendications précédentes,
**caractérisé en ce**
**que** les moyens (7) servant à détecter des données relatives au fonctionnement déterminent la durée de fonctionnement et le mode de fonctionnement de l'actionneur (2).

11. Système selon l'une quelconque des revendications précédentes,
**caractérisé en ce**
**que** les actionneurs (2, 3, 4) sont reliés au dispositif de commande (5) par un système de bus (6) sans fil.

12. Système selon l'une quelconque des revendications 1 à 10,
**caractérisé en ce**
**que** les actionneurs (2, 3, 4) sont reliés au dispositif de commande (5) par un système de bus (6) raccordé par fil.

13. Système selon l'une quelconque des revendications précédentes,
**caractérisé en ce**
**que** le dispositif de collecte de données (9) est équipé de moyens afin d'évaluer statistiquement les données reçues.

14. Système selon l'une quelconque des revendications 1 à 12,
**caractérisé en ce**
**que** le dispositif de collecte de données (9) est équipé de moyens afin de déclencher une alarme sur la base des données reçues.

15. Utilisation d'un actionneur (2) dans un système selon l'une quelconque des revendications précédentes, sachant que l'actionneur est équipé de moyens (7) servant à détecter des données relatives à l'environnement et/ou au fonctionnement ou est relié auxdits moyens, et qu'il peut être connecté à l'unité de commande (5) centrale du système de gestion de bâtiments par l'intermédiaire d'un système de bus (6) et peut être commandé par ladite unité de commande, et sachant que l'actionneur (2) présente une unité d'émission (8) servant à transmettre les données détectées au dispositif de collecte de données (9) non relié au dispositif de commande (5), sachant que la transmission des données détectées ne se fait qu'en direction du dispositif de collecte de données (9) et que l'actionneur (2) ne peut recevoir aucun signal du dispositif de collecte de données (9).

16. Utilisation d'un actionneur selon la revendication 15,
**caractérisée en ce**
**que** la transmission de données se fait par l'intermédiaire d'un réseau de communication accessible au public.

17. Utilisation d'un actionneur selon l'une quelconque des revendications 15 ou 16,
**caractérisée en ce**
**que** la transmission de données se fait par l'intermédiaire d'Internet, et en ce que les données sont transmises de manière correspondante en utilisant le protocole TCP/IP.

18. Utilisation d'un actionneur selon la revendication 17,
**caractérisée en ce**
**que** l'actionneur (2) possède une adresse IP unique.

19. Utilisation d'un actionneur selon l'une quelconque des revendications 17 ou 18,
**caractérisée en ce**
**que** l'actionneur (2) est équipé de moyens afin d'établir un contact avec un serveur web.

20. Utilisation d'un actionneur selon l'une quelconque des revendications 15 ou 16,
**caractérisée en ce**
**que** la transmission de données se fait par l'intermédiaire d'un réseau de radiotéléphonie.

21. Utilisation d'un actionneur selon l'une quelconque des revendications 15 à 20,
**caractérisée en ce**
**que** les moyens (7) servant à détecter des données relatives à l'environnement sont des capteurs (7) servant à mesurer la température ambiante, l'humidité de l'air, la luminosité et/ou la présence de personnes.

22. Utilisation d'un actionneur selon l'une quelconque des revendications 15 à 20,
**caractérisée en ce**
**que** les moyens (7) servant à détecter des données relatives au fonctionnement déterminent la durée de fonctionnement et le mode de fonctionnement de l'actionneur (2).

23. Utilisation d'un actionneur selon l'une quelconque des revendications 15 à 22,
**caractérisée en ce**
**que** l'actionneur (2) est relié au dispositif de commande (5) par un système de bus (6) sans fil.

24. Utilisation d'un actionneur selon l'une quelconque des revendications 15 à 22,
**caractérisée en ce**
**que** l'actionneur (2) est relié au dispositif de commande (5) par un système de bus (6) raccordé par fil.
